# FASCICULE DE BREVET EUROPEEN

(11) **EP 2 791 596 B1**
(45) Date de publication et mention de la délivrance du brevet: **21.11.2018**
(21) Numéro de dépôt: 12791801.9
(22) Date de dépôt: 30.11.2012
(51) Int. Cl.: F25B 29/00, F25B 25/00, B60H 1/32, B60H 1/00, B60H 1/03

(54) **DISPOSITIF DE CONDITIONNEMENT THERMIQUE D'UNE CHAÎNE DE TRACTION ET D'UN HABITACLE DE VÉHICULE**
VORRICHTUNG ZUR KLIMATISIERUNG EINES ANTRIEBSSTRANGS UND EINES FAHRZEUGINNENRAUMS
DEVICE FOR AIR CONDITIONING A DRIVE TRAIN AND A PASSENGER COMPARTMENT OF A VEHICLE

(30) Priorité: 15.12.2011 FR 1103865
(43) Date de publication de la demande: 22.10.2014
(73) Titulaire: Valeo Systemes Thermiques, 78320 Le Mesnil Saint Denis (FR)
(72) Inventeur: LABASTE MAUHE, Laurent, F-92140 Clamart (FR); HALLER, Régine, F-78490 Boissy Sans Avoir (FR); TAKLANTI, Abdelmajid, F-91190 Gif Sur Yvette (FR)
(74) Mandataire: Tran, Chi-Hai
(86) Numéro de dépôt international: PCT/EP2012/074054
(87) Numéro de publication internationale: WO 2013/087425

(56) Documents cités:
- WO-A1-2011/086683
- US-A1- 2008 251 235
- US-A1- 2011 174 000

## Description

Le domaine technique de la présente invention est celui des véhicules à moteur, en particulier des véhicules à propulsion électrique. Plus particulièrement, l'invention vise un dispositif de conditionnement thermique assurant le chauffage et le refroidissement de la chaîne traction électrique et de l'habitacle d'un tel véhicule.

Actuellement, les constructeurs automobiles développent des véhicules qui fonctionnent à partir de nouvelles sources d'énergie en complément ou en remplacement des véhicules à moteur thermique. En particulier, il est proposé des véhicules dont la propulsion est réalisée à partir de l'énergie électrique. Une telle solution représente une alternative intéressante. Il est toutefois nécessaire d'embarquer différents composants liés à la chaîne de traction électrique tels que des batteries pour stocker l'énergie électrique, un moteur électrique pour assurer une propulsion du véhicule et un onduleur pour délivrer un signal électrique au moteur électrique.

La durée de vie et les performances de ces composants, en particulier les batteries, sont conditionnées par la température du milieu les environnant. Il est donc nécessaire de garantir un maintien à une température déterminée de ces composants en phase de roulage du véhicule, c'est-à-dire quand les batteries se déchargent. Il faut également garantir un refroidissement de ces composants pendant les phases de chargement, car elles se traduisent par un échauffement de ces composants.

En parallèle, il est nécessaire d'assurer le confort des passagers d'un habitacle du véhicule. A cet effet, il est nécessaire de modifier les paramètres aérothermiques de l'habitacle du véhicule. Il est, toutefois, nécessaire que le conditionnement thermique de l'habitacle ne nuise pas à l'autonomie du véhicule de manière trop importante.

A cet effet, il a été proposé d'utiliser une boucle de climatisation dite « classique » activée par un compresseur électrique et dont la circulation du fluide réfrigérant est configurée pour permettre un chauffage ou refroidissement d'un flux d'air destiné à être envoyé dans l'habitacle du véhicule. Toutefois, une telle boucle de climatisation « classique » ne permet pas d'assurer le conditionnement thermique des composants de la chaîne de traction.

Il a également été proposé d'utiliser une boucle de climatisation dite « classique » qui échange avec une pluralité de boucles secondaires dans lesquelles circule un fluide caloporteur. Les boucles secondaires assurent le refroidissement des composants de la chaîne de traction. Toutefois, cette solution est d'une grande complexité, en particulier en ce qui concerne la commande des organes assurant l'interconnexion entre les boucles secondaires, en particulier lors d'un basculement entre les divers modes de fonctionnement. On notera que le document US 2011/0174000 A1 divulgue une boucle de conditionnement thermique de ce type.

Par ailleurs, la configuration ci-dessus emploi un échangeur de face avant qui fonctionne en mode condenseur et en mode évaporateur. Or, le rendement du mode évaporateur est affecté dans le cas où la température du flux d'air qui traverse cet échangeur de face avant passe en dessous de 0°C et que ce flux d'air contient un niveau d'humidité important. Cette situation se traduit par un givrage de l'échangeur de face avant qui nuit à l'échange thermique.

Le but de la présente invention est donc de résoudre les inconvénients décrits précédemment, principalement en proposant une boucle de conditionnement thermique comprenant un circuit de fluide réfrigérant et un circuit de fluide caloporteur dont la mise en oeuvre est simple, tout en garantissant le conditionnement thermique des composants de la chaîne de traction et de l'habitacle en toutes conditions, c'est-à-dire, notamment par temps chaud en été, par temps froid en hiver, par temps humide ou pendant la phase de charge des batteries.

L'invention a donc pour objet un dispositif de conditionnement thermique selon la revendication 1.

L'échangeur de chaleur fluide/fluide réalise un échange thermique entre le fluide réfrigérant et le fluide caloporteur.

On notera que le premier échangeur thermique associé à un composant, le deuxième échangeur thermique associé à un composant et/ou le troisième échangeur thermique associé à un composant sont des échangeurs thermiques distincts.

Selon une autre caractéristique, le moyen de chauffage comprend un élément de chauffage électrique.

Avantageusement, le moyen de chauffage est installé immédiatement en amont de l'échangeur de chaleur fluide/fluide, selon le sens de circulation du fluide caloporteur dans la première boucle.

Avantageusement encore, le moyen de chauffage est installé immédiatement en aval du dispositif d'interconnexion, selon le sens de circulation du fluide caloporteur dans la première boucle.

De plus, la première boucle comprend une première pompe de circulation du fluide caloporteur.

Selon une autre caractéristique, la deuxième boucle comprend une deuxième pompe de circulation du fluide caloporteur.

Avantageusement encore, la deuxième boucle comprend une conduite de contournement du radiateur, dite troisième conduite de contournement.

Selon une variante de la présente invention, l'échangeur de chaleur fluide/fluide est installé en parallèle de l'évaporateur.

De manière complémentaire ou alternative, le circuit de fluide réfrigérant comporte une conduite de contournement de l'échangeur de chaleur intérieur, dite première conduite de contournement, ainsi qu'une autre conduite de contournement de l'échangeur de chaleur extérieur, dite deuxième conduite de contournement.

Selon une variante de réalisation, un flux d'air intérieur est canalisé par un boîtier dans lequel sont disposés l'évaporateur et l'échangeur de chaleur intérieur afin d'être traversés par le flux d'air intérieur préalablement à sa distribution dans un habitacle d'un véhicule.

L'invention vise également les différents modes de fonctionnement ou configurations du circuit de fluide réfrigérant et du circuit de fluide caloporteur.

Ainsi, le fluide réfrigérant circule dans le circuit de fluide réfrigérant, successivement, dans le compresseur, la première conduite de contournement, l'échangeur de chaleur extérieur ou la deuxième conduite de contournement, l'évaporateur et/ou l'échangeur de chaleur fluide/fluide, pour retourner au compresseur.

Alternativement, le fluide réfrigérant circule dans le circuit de fluide réfrigérant, successivement, dans le compresseur, l'échangeur de chaleur intérieur, l'échangeur de chaleur extérieur ou la deuxième conduite de contournement, l'évaporateur et/ou l'échangeur de chaleur fluide/fluide, pour retourner au compresseur.

Selon une variante, le fluide caloporteur circule dans la première boucle, successivement, dans le premier échangeur thermique associé à un composant, le dispositif d'interconnexion, le moyen de chauffage, l'échangeur de chaleur fluide/fluide, pour retourner au premier échangeur thermique associé à un composant.

Dans un tel dispositif, le fluide caloporteur circule dans la deuxième boucle, successivement, dans le deuxième échangeur thermique associé à un composant, éventuellement dans le troisième échangeur thermique associé à un composant, dans le radiateur et/ou la troisième conduite de contournement, dans le dispositif d'interconnexion, pour retourner au deuxième échangeur thermique associé à un composant.

Enfin, le fluide caloporteur circule dans le circuit de fluide caloporteur, successivement, dans le premier échangeur thermique associé à un composant, le dispositif d'interconnexion, le deuxième échangeur thermique associé à un composant, le radiateur et/ou la troisième conduite de contournement, le dispositif d'interconnexion, le moyen de chauffage, l'échangeur de chaleur fluide/fluide, pour retourner au premier échangeur thermique associé à un composant.

De manière préférentielle, l'échangeur de chaleur fluide/fluide est intercalé entre, d'une part l'échangeur de chaleur extérieur et/ou le canal de contournement et, d'autre part le compresseur.

Selon la présente invention, le flux d'air intérieur est un flux d'air recyclé, issu de l'habitacle du véhicule, et/ou un flux d'air frais, c'est-à-dire extérieur à l'habitacle du véhicule.

Selon la présente invention, le circuit de fluide réfrigérant et le circuit de fluide réfrigérant sont aptes à être configurés selon les différents modes de fonctionnement en combinaison.

Les diverses configurations du circuit de fluide réfrigérant et du circuit de fluide caloporteur permettent, notamment, d'assurer :
- un mode dit « été », permettant de refroidir le flux d'air intérieur envoyé dans l'habitacle,
- un mode dit « hiver », permettant de chauffer le flux d'air intérieur,
- un mode dit « déshumidification», permettant de déshumidifier le flux d'air intérieur,
   tout en assurant un conditionnement thermique d'au moins un des composants liés à la chaîne de traction électrique tels que des batteries pour stocker l'énergie électrique, un moteur électrique pour assurer l'entraînement du véhicule et un onduleur pour adapter le signal électrique au moteur électrique.

La présente invention est particulièrement apte à fonctionner selon un mode de charge de la batterie dans lequel le fluide réfrigérant refroidit le fluide caloporteur au moyen de l'échangeur fluide/fluide.

Un premier avantage de la présente invention réside dans la possibilité de bénéficier de l'inertie thermique de la batterie. L'invention permet notamment de mutualiser les pertes thermiques des composants de la chaîne de traction électrique et de les dissiper dans le fluide réfrigérant, par l'intermédiaire de l'échangeur de chaleur fluide/fluide, pour améliorer le rendement du cycle thermodynamique qui prend place dans le circuit de fluide réfrigérant.

L'invention permet, d'une manière générale, de maintenir des conditions optimales dans l'utilisation des organes sensibles de la chaîne de traction électrique quelque soit la phase d'utilisation du véhicule : arrêt, charge, roulage urbain ou roulage extra-urbain.

Un autre avantage réside dans la possibilité de limiter le vieillissement des composants de la chaîne de traction, en particulier la batterie grâce à un maintien à une température optimale pendant les phases de fonctionnement, y compris une phase de charge rapide, par exemple d'environ une heure.

Un autre avantage réside dans la garantie d'un niveau de confort thermique dans l'habitacle sur une grande plage de températures extérieures, notamment comprises entre -20°C et +45°C.

Un autre avantage réside dans le fait que l'échangeur de chaleur extérieur est soit utilisé exclusivement en condenseur, soit non-utilisé. On évite ainsi le problème de formation de givre sur la surface de cet échangeur, connu lorsque ce dernier est utilisé en tant qu'évaporateur.

D'autres caractéristiques et avantages de l'invention apparaîtront à l'examen de la description qui va suivre en regard des dessins annexés, donnés à titre d'exemples non limitatifs, qui pourront servir à compléter la compréhension de la présente invention et l'exposé de sa réalisation mais aussi, le cas échéant, contribuer à sa définition sur lesquels:
- la figure 1 est une vue schématique d'un dispositif de conditionnement thermique selon la présente invention,
- la figure 2 est une vue schématique du dispositif de conditionnement thermique selon la présente invention en mode « déshumidification », selon une première variante,
- la figure 3 est une vue schématique du dispositif de conditionnement thermique selon la présente invention en mode « déshumidification », selon une deuxième variante,
- la figure 4 est une vue schématique du dispositif de conditionnement thermique selon la présente invention en mode « été », selon un premier mode de réalisation,
- la figure 5 est une vue schématique du dispositif de conditionnement thermique selon la présente invention en mode « été », selon un deuxième mode de réalisation,
- la figure 6 est une vue schématique du dispositif de conditionnement thermique selon la présente invention en mode « charge »,
- la figure 7 est une vue schématique du dispositif de conditionnement thermique selon la présente invention en mode « hiver ».

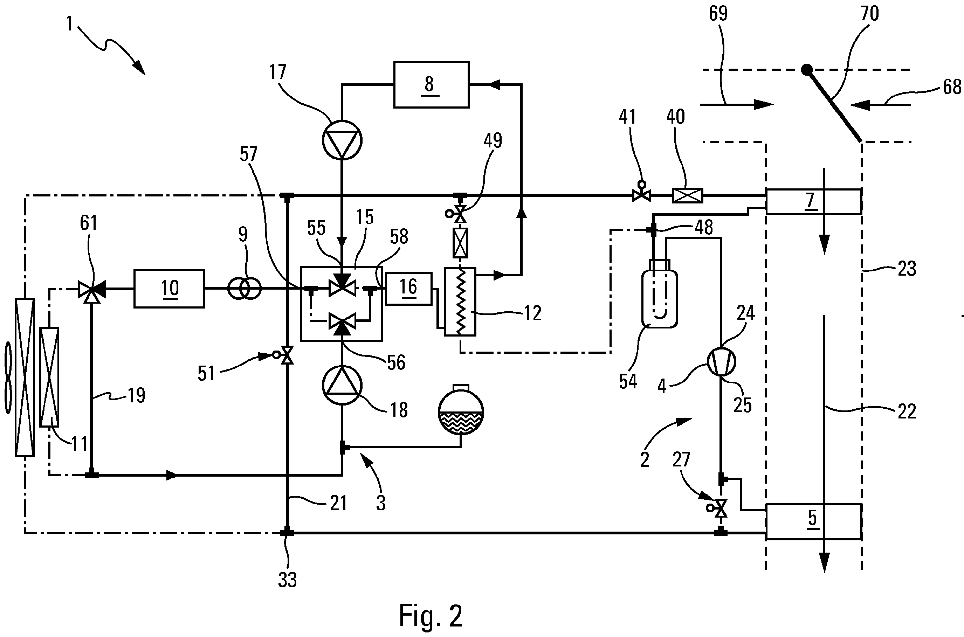

Dans les figures 2 à 7 détaillant la présente invention et décrites ci-dessous, il a été adopté comme convention qu'une circulation de fluide est représentée en trait continu alors qu'une absence de circulation de fluide est représentée en trait interrompu.

Tel que présenté, un dispositif de conditionnement thermique 1 selon la présente invention comprend un circuit de fluide réfrigérant 2 et un circuit de fluide caloporteur 3.

Le circuit de fluide réfrigérant 2 est une boucle fermée à l'intérieur de laquelle circule un fluide réfrigérant. Le fluide réfrigérant peut être un fluide réfrigérant sous-critique, comme par exemple un composé connu sous l'appellation R1234yf ou R134A. Le fluide réfrigérant peut également être un fluide réfrigérant supercritique, comme par exemple le dioxyde de carbone, connu sous l'appellation R744A.

Le fluide réfrigérant est mis en circulation par un compresseur 4 dont la fonction est d'augmenter la pression et la température du fluide réfrigérant. Le compresseur 4 est avantageusement électrique, en particulier adapté pour fonctionner selon une tension comprise entre 200 Volts et 500 Volts. On entend par électrique le fait que l'entraînement du mécanisme de compression est opéré par un moteur électrique, par exemple installé à l'intérieur du compresseur.

Par ailleurs, le compresseur 4 est, par exemple, un compresseur à pistons, un compresseur à palettes ou un compresseur à spirale. De même, le compresseur 4 peut être à contrôle interne ou à contrôle externe.

Le compresseur 4 comprend un orifice d'entrée 24 par lequel arrive le fluide réfrigérant et un orifice de sortie 25 par lequel le fluide réfrigérant comprimé est évacué. L'orifice de sortie 25 est raccordé à un premier point de raccordement 26 présentant une entrée de fluide et deux sorties de fluide. L'entrée de fluide est raccordée à l'orifice de sortie 25 du compresseur 4 alors qu'une première des deux sorties de fluide est raccordée à une entrée 28 d'un échangeur de chaleur intérieur 5. La seconde des deux sorties de fluide est quant à elle raccordée à un premier moyen de commutation 27, par exemple, une première vanne deux-voies, par l'intermédiaire d'une voie d'entrée 31.

L'échangeur de chaleur intérieur 5 est apte à permettre un échange de calories avec un flux d'air intérieur 22 destiné à être envoyé à l'intérieur d'un habitacle d'un véhicule. En pratique, l'échangeur de chaleur intérieur 5 est installé dans un boîtier 23 dans lequel circule le flux d'air intérieur 22 envoyé dans l'habitacle du véhicule automobile.

Un tel échangeur de chaleur intérieur 5 comprend encore une sortie 29 raccordée à un deuxième point de raccordement 30, ce dernier comportant deux entrées et une sortie. La première de ces entrées est raccordée à une voie de sortie 32 de la première vanne deux-voies. Une deuxième de ces entrées est raccordée à la sortie 29 de l'échangeur de chaleur intérieur 5.

Le boîtier 23 loge également un évaporateur 7, avantageusement disposé en amont de l'échangeur de chaleur intérieur 5, selon le sens de circulation du flux d'air intérieur 22. Optionnellement, un radiateur additionnel non représenté, par exemple un radiateur électrique, est installé dans le boîtier 23, avantageusement en aval de l'échangeur de chaleur intérieur 5. Selon la présente invention, l'évaporateur 7 est intégré au circuit de fluide réfrigérant 2.

Préférentiellement, le flux d'air intérieur 22 traverse l'évaporateur 7 et/ou l'échangeur de chaleur intérieur 5 et/ou le radiateur additionnel. En conséquence, il ressort que l'échangeur de chaleur intérieur 5 est un échangeur air/fluide réfrigérant.

Entre la seconde sortie du premier point de raccordement 26 et l'entrée du deuxième point de raccordement 30, est prévue une conduite de contournement 20 de l'échangeur de chaleur intérieur 5. Cette conduite de contournement 20 sera appelée ci-après première conduite de contournement 20.

La première vanne deux-voies est installée sur cette première conduite de contournement 20 de manière à contrôler une circulation de fluide réfrigérant au travers de la première conduite de contournement 20.

De manière alternative, le premier moyen de commutation 27 peut être une vanne trois-voies installée en lieu et place soit du premier point de raccordement 26, soit du deuxième point de raccordement 30.

La première conduite de contournement 20 permet au fluide réfrigérant de circuler directement du compresseur 4 vers le deuxième point de raccordement 30 sans traverser l'échangeur de chaleur intérieur 5, pour éviter tout échange de chaleur avec le flux d'air intérieur 22.

La circulation du fluide réfrigérant dans la première conduite de contournement 20 ou dans l'échangeur de chaleur intérieur 5 est placée sous la dépendance de la première vanne deux-voies. A cet effet, la première vanne deux-voies est commandée, par exemple, par une stratégie de pilotage mise en oeuvre par un dispositif de contrôle non représenté.

Pour une meilleure intégration, un module contenant la conduite de contournement 20, l'échangeur 5 et le moyen de commutation 27 peut être créé.

Le deuxième point de raccordement 30 est raccordé à un troisième point de raccordement 33 capable de laisser circuler le fluide réfrigérant, soit vers une deuxième conduite de contournement 21, soit vers un échangeur de chaleur extérieur 6.

L'échangeur de chaleur extérieur 6 est apte à permettre un échange de calories avec un flux d'air extérieur destiné à être envoyé à l'extérieur de l'habitacle du véhicule. Il s'agit donc d'un échangeur de chaleur air/fluide réfrigérant.

Selon les divers modes de fonctionnement de la présente invention, l'échangeur de chaleur extérieur 6, quand il est traversé par le fluide réfrigérant, est apte à fonctionner uniquement en tant que condenseur selon les configurations du circuit de fluide réfrigérant 1.

Préférentiellement, l'échangeur de chaleur extérieur 6 est installé en face avant du véhicule afin de bénéficier d'un flux d'air dynamique, en tant que flux d'air extérieur, quand le véhicule est en mouvement.

Le fluide réfrigérant entre dans l'échangeur de chaleur extérieur 6 par un orifice d'entrée 34 et en sort par un orifice de sortie 35, avant de rejoindre un quatrième point de raccordement 36. Ce dernier est susceptible de recevoir le fluide réfrigérant en provenance de l'échangeur de chaleur extérieur 6 et/ou en provenance du troisième point de raccordement 33.

Entre ce troisième point de raccordement 33 et ce quatrième point de raccordement 36, est prévue une conduite de contournement de l'échangeur de chaleur extérieur, ci-après appelée deuxième conduite de contournement 21.

Ainsi, le fluide réfrigérant est susceptible de contourner l'échangeur de chaleur extérieur 6 en circulant au travers de la deuxième conduite de contournement 21. Cette deuxième conduite de contournement 21 constitue un canal empêchant ou réduisant la circulation de fluide réfrigérant dans l'échangeur de chaleur extérieur 6 afin d'interdire ou de réduire l'échange thermique au sein de l'échangeur de chaleur extérieur 6 entre le fluide réfrigérant et le flux d'air extérieur.

La circulation du fluide réfrigérant dans la deuxième conduite de contournement 21 ou dans l'échangeur de chaleur extérieur 6 est commandée par un deuxième moyen de commutation 51, qui prend ici la forme d'une deuxième vanne deux-voies, commandée préférentiellement par la stratégie de pilotage mise en oeuvre par le dispositif de contrôle.

La deuxième vanne deux-voies comprend une voie d'entrée 37 raccordée à une sortie du troisième point de raccordement 33 et une voie de sortie 38 raccordée à une entrée du quatrième point de raccordement 36.

De manière alternative, le deuxième moyen de commutation 51 peut être une vanne trois-voies installée en lieu et place, soit du troisième point de raccordement 33, soit du quatrième point de raccordement 36.

Pour une meilleure intégration, un module contenant l'échangeur extérieur 6, les troisième et quatrième points de raccordement 33, 36 et le deuxième moyen de commutation 51 peut être créé.

Une sortie du quatrième point de raccordement 36 est raccordée une entrée d'un cinquième point de raccordement 39 qui permet une circulation de fluide réfrigérant, en parallèle de l'évaporateur 7, dans un échangeur de chaleur fluide/fluide 12. Cet échangeur de chaleur fluide/fluide 12 assure, notamment exclusivement, un échange de chaleur entre le fluide réfrigérant circulant dans le circuit de fluide réfrigérant 2 et un fluide caloporteur circulant dans le circuit de fluide caloporteur 3.

Immédiatement en amont de l'évaporateur 7, selon le sens de circulation du fluide réfrigérant, est disposé un premier organe de détente 40. Préférentiellement, le premier organe de détente 40 est également disposé en aval, selon le sens de circulation du fluide réfrigérant, du cinquième point de raccordement 39.

Entre ce cinquième point de raccordement 39 et l'organe de détente 40, est prévue un troisième moyen de commutation 41, ci-après appelé troisième vanne deux-voies. De manière plus précise, la troisième vanne deux-voies comprend une entrée 42 raccordée à une sortie du cinquième point de raccordement, et une sortie 43 raccordée à un orifice d'entrée 44 du premier organe de détente 40. Le fluide réfrigérant sort de ce premier organe de détente 40 par un orifice de sortie 45 raccordée à un orifice d'entrée de l'évaporateur 7.

Le premier organe de détente 40 est, par exemple, un organe de détente thermostatique, un orifice calibré ou encore un détendeur électronique commandé par la stratégie de pilotage mise en oeuvre par le dispositif de contrôle.

Après avoir traversé ce premier organe de détente 40, le flux réfrigérant pénètre dans l'évaporateur 7 par l'intermédiaire de son orifice d'entrée 46. L'abaissement de la pression du fluide réfrigérant opéré par le premier organe de détente 40 assure un échange de chaleur permettant un abaissement de la température et une déshumidification du flux d'air intérieur 22 à la traversée de l'évaporateur 7.

Un orifice de sortie 47 de l'évaporateur 7 est relié à un sixième point de raccordement 48. Selon la présente invention, l'échangeur de chaleur fluide/fluide 12 est également relié à ce sixième point de raccordement 48. Ce sixième point de raccordement 48 permet de regrouper le fluide réfrigérant ayant traversé des parties différentes du circuit de fluide réfrigérant 2, notamment des parties de ce circuit installées en parallèle l'une par rapport à l'autre. Une première partie de ce circuit comprend un quatrième dispositif de commutation 49, un deuxième organe de détente 50 et l'échangeur de chaleur fluide/fluide 12. Une seconde partie de ce circuit comprend le troisième moyen de commutation 41, le premier organe de détente 40 et l'évaporateur 7.

Ainsi, le sixième point de raccordement 48 reçoit le fluide réfrigérant, soit exclusivement en provenance de l'évaporateur 7, soit exclusivement en provenance de l'échangeur de chaleur fluide/fluide 12, soit en provenance simultanément de ces deux composants du circuit de fluide réfrigérant 2.

Entre le cinquième point de raccordement 39 et l'échangeur de chaleur fluide/fluide 12, est agencé le deuxième organe de détente 50. Ce deuxième organe de détente 50 est, par exemple, un organe de détente thermostatique, un orifice calibré ou un détendeur électronique commandé par la stratégie de pilotage mise en oeuvre par le dispositif de contrôle.

Entre ce cinquième point de raccordement 39 et ce deuxième organe de détente 50, est agencé le quatrième moyen de commutation 49. Il s'agit dans cet exemple de réalisation d'une vanne deux-voies 49.

Pour une meilleure intégration, un module contenant les premier et second organes de détente 40, 41 et les troisième et quatrième points de commutation 41, 49 peut être créé.

Après avoir été détendu par le deuxième organe de détente 50, le fluide réfrigérant entre dans l'échangeur de chaleur fluide/fluide 12 par un orifice d'entrée 52. En traversant l'échangeur de chaleur fluide/fluide 12, le fluide réfrigérant échange de la chaleur avec le fluide caloporteur circulant également dans l'échangeur de chaleur fluide/fluide 12. Le fluide réfrigérant sort de l'échangeur de chaleur fluide/fluide 12 par un orifice de sortie 53 avant de rejoindre le sixième point de raccordement 48.

Le fluide réfrigérant regroupé par ce sixième point de raccordement en sort pour être dirigé vers le compresseur 4.

Avantageusement, un accumulateur 54 est agencé en amont du compresseur 4 et en aval du sixième point de raccordement 48. Le fluide réfrigérant pénètre dans l'accumulateur 54 par une entrée directement raccordée au sixième point de raccordement 48. L'accumulateur 54 comprend enfin une sortie par laquelle le fluide réfrigérant sort pour retourner vers le compresseur 4, en entrant dans ce dernier par son orifice d'entrée 24.

Selon la présente invention, le dispositif de conditionnement thermique 1 comprend le circuit de fluide réfrigérant 2 et le circuit de fluide caloporteur 3. Le circuit de fluide caloporteur 3 forme une boucle fermée à l'intérieur de laquelle circule le fluide caloporteur, par exemple, un composé à base d'eau additionnée de glycol.

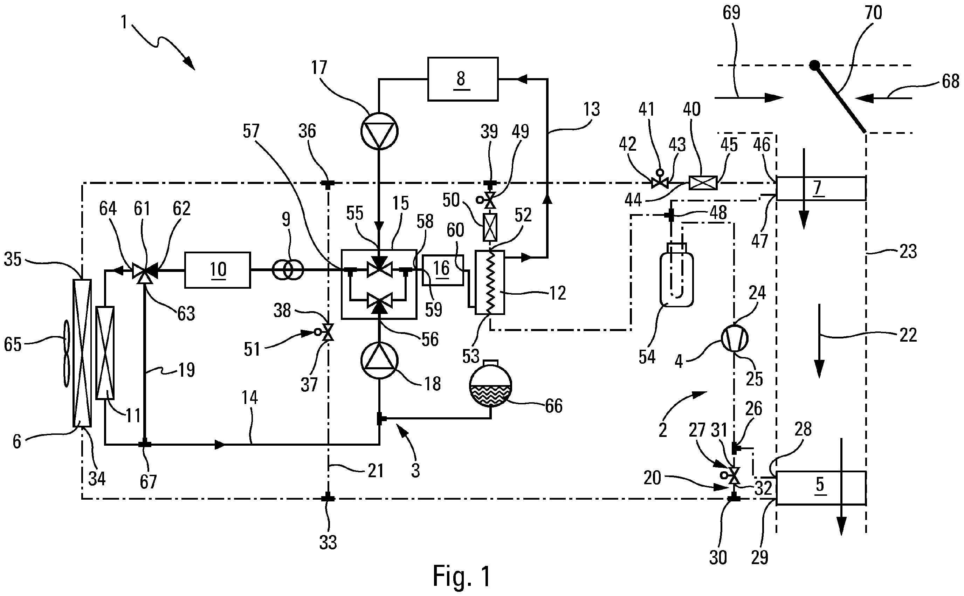

Le circuit de fluide caloporteur 3 est constitué d'une première boucle 13 et d'une deuxième boucle 14 en liaison mutuelle l'une à l'autre par un dispositif d'interconnexion 15. Ce dispositif d'interconnexion 15 est réalisé, par exemple, sous la forme d'une vanne quatre-voies mais il peut également prendre la forme de deux vannes trois-voies installées en parallèle l'une par rapport à l'autre, comme cela est représenté sur la figure 1.

Ainsi, en fonction de la phase de fonctionnement du dispositif de conditionnement thermique, la première boucle 13 et/ou la deuxième boucle 14 peuvent opérées de manière indépendante ou de manière conjointe.

La première boucle 13 forme un circuit dans lequel se trouvent une première pompe 17, le dispositif d'interconnexion 15, un moyen de chauffage 16 du fluide caloporteur, l'échangeur de chaleur fluide/fluide 12 et un premier échangeur thermique associé à un composant 8, parcourus dans cet ordre par le fluide caloporteur.

Le moyen de chauffage 16 est ici intercalé entre le dispositif d'interconnexion 15 et l'échangeur de chaleur fluide/fluide 12. Il est avantageusement directement en amont de l'échangeur de chaleur fluide/fluide 12. Ce moyen de chauffage 16 peut encore être directement en aval du dispositif d'interconnexion 15, l'amont et l'aval étant déterminés par le sens de circulation du fluide caloporteur dans la première boucle 13.

La première pompe 17 est par exemple une pompe électrique, c'est-à-dire comprenant un moteur électrique. Elle est raccordée au dispositif d'interconnexion 15, le fluide entrant dans ce dernier par un premier orifice d'entrée 55.

Le dispositif d'interconnexion 15 comprend, en complément du premier orifice d'entrée 55 faisant partie de la première boucle 13, un deuxième orifice d'entrée 56 faisant partie de la deuxième boucle 14. Le dispositif d'interconnexion 15 comprend également un premier orifice de sortie 57 et un deuxième orifice de sortie 58 faisant partie, respectivement, de la deuxième boucle 14 et de la première boucle 13 du circuit de fluide caloporteur 3.

Le deuxième orifice de sortie 58 du dispositif d'interconnexion 15 est raccordé au moyen de chauffage 16 du fluide caloporteur, le fluide entrant dans celui-ci par une entrée 59. Ce moyen de chauffage 16 comprend une sortie de fluide caloporteur 60 raccordée à l'échangeur de chaleur fluide/fluide 12. Le fluide caloporteur traverse ensuite cet échangeur de chaleur fluide/fluide 12 puis traverse le premier échangeur thermique associé à un composant 8.

Le moyen de chauffage 16 comprend un élément de chauffage électrique, c'est-à-dire apte à fournir des calories lorsqu'il est alimenté par une source électrique. Selon une variante, l'élément de chauffage électrique est agencé pour fonctionner sous une tension comprise entre 200 V et 500 V. Dans un tel cas, la source électrique est formée par un module de batterie qui fournit l'énergie à un moteur électrique d'entraînement du véhicule.

A titre d'exemple selon le mode de réalisation présenté, le premier échangeur thermique associé à un composant 8 est un échangeur de chaleur entre le fluide caloporteur et un premier composant d'une chaîne de traction électrique du véhicule. En particulier, le premier composant est au moins une batterie, ou un module de batteries, nécessaire pour stocker l'énergie électrique du véhicule et assurer la fourniture de l'énergie nécessaire à un déplacement du véhicule. Selon l'exemple de réalisation présenté, le premier échangeur thermique associé à un composant 8 est raccordé d'un côté à la première pompe 17, et de l'autre à l'échangeur de chaleur fluide/fluide 12.

La deuxième boucle 14 forme un circuit dans lequel se trouvent une deuxième pompe 18, le dispositif d'interconnexion 15, un deuxième échangeur thermique associé à un composant 9, un troisième échangeur thermique associé à un composant 10, un moyen de gestion 61 de la circulation de fluide caloporteur soit vers le radiateur 11, soit vers une conduite de contournement 19 de ce radiateur 11, ci-après appelée troisième conduite de contournement 19. Ces composants sont parcourus dans cet ordre par le fluide caloporteur.

Selon l'exemple présenté, la deuxième pompe 18 est par exemple une pompe électrique, c'est-à-dire comprenant un moteur électrique. Elle est raccordée au deuxième orifice d'entrée 56 du dispositif d'interconnexion 15. Le premier orifice de sortie 57 du dispositif d'interconnexion 15 est quant à lui raccordé à un orifice d'entrée du deuxième échangeur thermique associé à un composant 9.

Dans cet exemple de réalisation, le fluide caloporteur traverse le deuxième échangeur 9 puis le troisième échangeur thermique associé à un composant 10 avant d'atteindre le moyen de gestion 61 de la circulation du fluide caloporteur. Ce dernier est notamment formé par une vanne trois-voies installée à la confluence d'une portion du circuit contenant le radiateur 11 et de la troisième conduite de contournement 19.

La vanne trois-voies dudit moyen de gestion 61 est agencée en aval du troisième échangeur thermique associé à un composant 10, selon le sens de circulation du fluide caloporteur dans la deuxième boucle 14, et comprend une voie d'entrée 62 raccordée au troisième échangeur thermique associé à un composant 10. La vanne trois voies dudit moyen de gestion 61 comprend également une première voie de sortie 63 et une deuxième voie de sortie 64, la première voie de sortie 63 étant connectée à la troisième conduite de contournement 19 du radiateur 11 alors que la deuxième voie de sortie 64 est raccordée au radiateur 11.

Le radiateur 11 permet un échange de chaleur entre le flux d'air extérieur et le fluide caloporteur. Il est traversé par le flux d'air extérieur mis en mouvement, soit par le déplacement du véhicule, soit par un ventilateur 65. Le radiateur 11 est donc un échangeur de chaleur air/fluide caloporteur.

A titre d'exemple selon le mode de réalisation présenté, le deuxième échangeur thermique associé à un composant 9 est un échangeur de chaleur entre le fluide caloporteur et un premier composant de la chaîne de traction électrique du véhicule. En particulier, le deuxième composant est au moins onduleur dont la fonction est de transformer le courant continu en provenance de la batterie en courant alternatif triphasé pour alimenter le moteur électrique d'entraînement du véhicule.

Le troisième échangeur thermique associé à un composant 10 est un échangeur de chaleur entre le fluide caloporteur et un troisième composant de la chaîne de traction électrique du véhicule. En particulier, le troisième composant est le moteur de propulsion du véhicule, en particulier un moteur électrique.

Pour garantir la fiabilité, la durée de vie et les performances des divers composants de cette chaîne de traction électrique du véhicule, en particulier la batterie ou du module de batteries, il est nécessaire d'assurer un conditionnement thermique de ces composants pour les maintenir dans une plage de températures déterminée quelque soit la phase de fonctionnement et/ou les conditions de roulage du véhicule. Par temps froid, il faut donc réchauffer le(s) composant(s) alors que, par temps chaud ou en phase de charge, il faut les refroidir.

De façon complémentaire, la deuxième boucle 14 comprend un vase d'expansion 66, avantageusement raccordé au circuit de fluide caloporteur 3 immédiatement en amont de la deuxième pompe 18, selon le sens de circulation du fluide caloporteur dans la deuxième boucle 14.

La deuxième boucle 14 du circuit de fluide caloporteur 2 comprend également un point collecteur 67 agencé entre le radiateur 11 et la deuxième pompe 18.

La troisième conduite de contournement 19 relie le moyen de gestion 61 de la circulation du fluide caloporteur avec le point collecteur 67. La circulation du fluide caloporteur à l'intérieur de la troisième conduite de contournement 19 et/ou à l'intérieur du radiateur 11 est ainsi placée sous la dépendance de ce moyen de gestion 61, commandé par une stratégie de pilotage mise en oeuvre par le dispositif de contrôle non représenté.

Lorsque le fluide caloporteur passe par la troisième conduite de contournement 19, le débit de fluide caloporteur dans le radiateur 11 est réduit ou nul. Ainsi, l'échange de chaleur entre le fluide caloporteur et le flux d'air extérieur est réduit ou supprimé.

Avantageusement, le radiateur 11 est installé en face avant du véhicule afin de bénéficier du flux d'air dynamique, en tant que flux d'air extérieur, quand le véhicule est en mouvement, éventuellement complémenté par un flux d'air généré par le ventilateur 65.

Le radiateur 11 est susceptible d'être disposé en aval ou en amont de l'échangeur de chaleur extérieur 6, selon le sens de circulation du flux d'air extérieur au travers de ces échangeurs thermiques. L'échangeur de chaleur extérieur 6 et le radiateur 11 peuvent également bénéficier du flux d'air généré par le ventilateur 65 en complément du flux d'air dynamique.

Il est également prévu par l'invention que le radiateur 11 et l'échangeur de chaleur extérieur 6 soient installés cote-à-cote, deux flux d'air extérieurs distincts pouvant alors traverser chaque échangeur. On assure ainsi une indépendance thermique entre le radiateur 11 et l'échangeur de chaleur extérieur 6.

Le flux d'air intérieur 22 qui circule dans le boîtier 23 est un flux d'air frais 68 prélevé à l'extérieur de l'habitacle et/ou un flux d'air recyclé 69, prélevé à l'intérieur de l'habitacle du véhicule. La sélection de la proportion de flux d'air frais 68 par rapport au flux d'air recyclé 69 pénétrant dans le boîtier 23 pour former le flux d'air intérieur 22, est contrôlée par un moyen de sélection 70, par exemple un volet.

La figure 2 est une vue schématique du dispositif de conditionnement thermique selon la présente invention en mode « déshumidification » selon une première variante, par exemple quand la température extérieure est comprise entre 0°C et 5°C.

Dans cette configuration, le premier moyen de commutation 27, en particulier la première vanne deux-voies, est agencé afin d'autoriser la circulation du fluide réfrigérant du compresseur 4 à travers l'échangeur de chaleur intérieur 5 en échangeant de la chaleur avec le flux d'air intérieur 22. Ainsi, la première vanne deux-voies dudit premier moyen de commutation 27 interdit toute circulation du fluide réfrigérant au travers de la première conduite de contournement 20.

En mode « déshumidification » selon cette première variante, le fluide réfrigérant sort de l'échangeur de chaleur intérieur 5 et est dirigé vers le troisième point de raccordement 33. Le deuxième moyen de commutation 51 est placé en position passante de manière à autoriser une circulation du fluide réfrigérant dans la deuxième conduite de contournement 21. Ainsi, le fluide réfrigérant contourne l'échangeur de chaleur extérieur 6 et ne se trouve donc pas refroidi par le flux d'air extérieur.

Le quatrième moyen de commutation 49 est en position fermée si bien que le fluide réfrigérant ne circule pas dans la partie du circuit de fluide réfrigérant contenant l'échangeur de chaleur fluide/fluide 12.

Le troisième moyen de commutation 41 est en position passante et autorise la circulation du fluide réfrigérant dans le premier organe de détente 40 puis dans l'évaporateur 7.

Entre l'orifice de sortie 25 du compresseur 4 et le premier organe de détente 40, le fluide réfrigérant est à haute pression et haute température.

Le premier organe de détente 40 abaisse la pression du fluide réfrigérant. Le fluide réfrigérant se vaporise en échangeant avec le flux d'air intérieur 22 à la traversée de l'évaporateur 7. Un tel échange de chaleur permet d'assurer un refroidissement du flux d'air intérieur 22, et corrélativement un assèchement et/ou une déshumidification de ce flux d'air.

Enfin, le fluide réfrigérant sort de l'évaporateur 7, traverse le sixième point de raccordement 48, optionnellement l'accumulateur 54, pour retourner au compresseur 4.

Entre le premier organe de détente 40 et l'orifice d'entrée 24 du compresseur 4, le fluide réfrigérant est à basse pression et basse température.

En ce qui concerne le circuit de fluide caloporteur 3, le fluide caloporteur est mis en mouvement par la première pompe 17 et/ou par la seconde pompe 18. La première boucle 13 est raccordée à la deuxième boucle 14 au moyen du dispositif d'interconnexion 15. En pratique, le fluide caloporteur qui entre dans le dispositif d'interconnexion par le deuxième orifice d'entrée 56 en sort par le deuxième orifice de sortie 58, alors que le fluide caloporteur qui entre dans le dispositif d'interconnexion 15 par le premier orifice d'entrée 55 en sort par le premier orifice de sortie 57. On comprend ici que le fluide caloporteur circule successivement dans la première boucle 13 puis dans la deuxième boucle 14.

Dans ce mode, le fluide caloporteur circule successivement dans le moyen de chauffage 16, dans l'échangeur de chaleur fluide/fluide 12, dans le premier échangeur thermique associé à un composant 8, dans la première pompe 17, dans le dispositif d'interconnexion 15 de la manière indiquée ci-dessus, dans le deuxième échangeur thermique associé à un composant 9, dans le troisième échangeur thermique associé à un composant 10, dans la troisième conduite de contournement 19, dans la deuxième pompe 18 pour enfin retourner au dispositif d'interconnexion 15.

Dans cette phase de fonctionnement, le fluide caloporteur ne subit pas d'échange thermique avec le fluide réfrigérant puisque ce dernier ne circule pas au travers de l'échangeur de chaleur fluide/fluide 12.

Le moyen de gestion 61 de la circulation de fluide caloporteur impose une circulation de celui-ci dans la troisième conduite de contournement 19 et interdit la circulation du fluide caloporteur dans le radiateur 11. Le fluide caloporteur ne subit donc pas d'échange thermique avec le flux d'air extérieur.

En traversant le premier échangeur thermique associé à un composant 8, le deuxième échangeur thermique associé à un composant 9 et le troisième échangeur thermique associé à un composant 10, le fluide caloporteur conditionne, en particulier chauffe ou refroidit, les composants associés, en l'occurrence avantageusement la batterie ou le module de batteries et/ou l'onduleur et/ou le moteur électrique d'entraînement du véhicule. Une telle configuration permet de mutualiser les pertes par effet joule de ces composants et d'utiliser ces pertes vis-à-vis du cycle thermodynamique qui prend place dans le circuit de fluide réfrigérant 2.

On notera enfin que, avantageusement, le moyen de sélection interdit l'introduction du flux d'air frais 68 et autorise l'introduction du flux d'air recyclé 69 dans le boîtier 23.

La configuration du dispositif de conditionnement thermique, en mode « déshumidification » selon la première variante, présente un avantage particulier par temps froid, notamment en hiver. En effet, selon cet agencement, la totalité de la condensation du fluide réfrigérant s'effectue dans l'échangeur de chaleur intérieur 5. Ainsi, toutes les calories issues de la condensation sont dissipées dans le flux d'air intérieur 22 diffusé vers l'habitacle. Il n'y a pas de rejet de calories par l'intermédiaire du flux d'air extérieur. Il n'y a donc pas de perte d'énergie. Il existe donc une rationalisation de l'énergie embarquée.

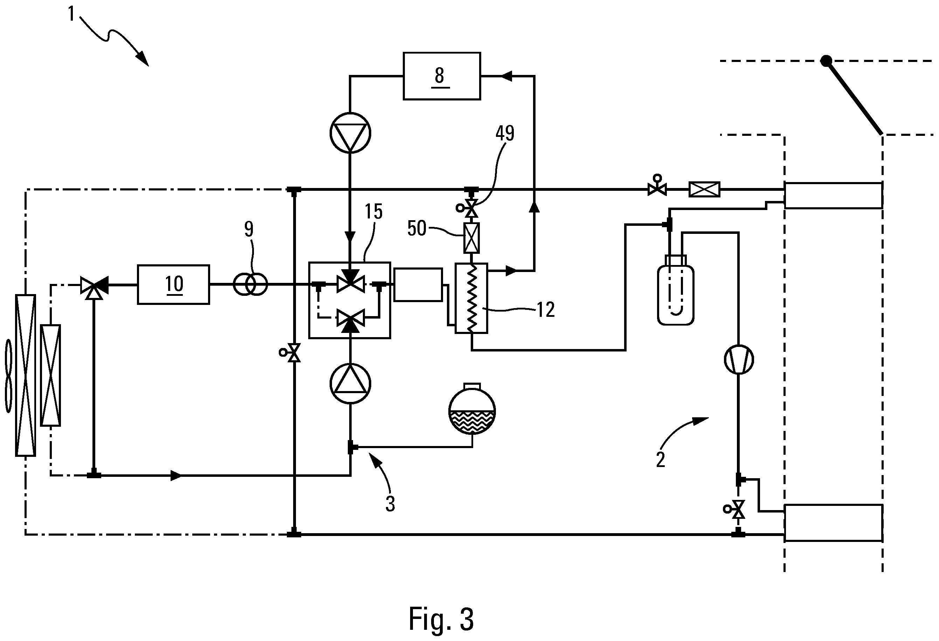

La figure 3 présente l'invention en mode « déshumidification » selon une deuxième variante. En conséquence, la figure 3 illustre une phase de fonctionnement identique à celle de la figure 2. La figure 3 sera décrite quant aux différences par rapport à la figure 2. Les éléments précédemment décrits et fonctionnant dans les mêmes conditions ne seront pas décrits plus en détails et on se reportera à la description de la figure 2 à cet effet.

Contrairement à la figure 2, la circulation du fluide réfrigérant est autorisée au sein de l'échangeur de chaleur fluide/fluide 12. Pour ce faire, le quatrième dispositif de commutation 49 est en position passante, de manière à ce que le fluide réfrigérant atteigne le deuxième organe de détente 50.

Le deuxième organe de détente 50 abaisse la pression du fluide réfrigérant. Le fluide réfrigérant se vaporise en échangeant avec le fluide caloporteur à la traversée de l'échangeur de chaleur fluide/fluide 12. Une telle configuration permet de capter les calories présentes dans le fluide caloporteur, celles-ci étant dégagées par les composants de la chaîne de traction électrique du véhicule et collectées par le premier échangeur thermique associé à un composant 8 et/ou le deuxième échangeur thermique associé à un composant 9 et/ou le troisième échangeur thermique associé à un composant 10.

L'échangeur de chaleur fluide/fluide 12 forme ainsi un levier supplémentaire à l'évaporateur 7, pour augmenter la quantité de fluide réfrigérant évaporé. Le rendement du cycle thermodynamique qui prend place dans le circuit de fluide réfrigérant 2 est amélioré par cette configuration.

On notera que cette configuration permet également d'assurer un refroidissement des composants de la chaîne de traction électrique du véhicule, via le fluide réfrigérant.

Cette configuration du dispositif de conditionnement thermique, en mode « déshumidification » selon la première (figure 2) ou la deuxième variante (figure 3), présente un autre avantage pour assurer un confort optimal des occupants de l'habitacle.

En effet, la position du moyen de sélection 70 selon les figures 2 et 3, dite position « recyclage », assure uniquement l'introduction du flux d'air recyclé 69 dans le boîtier 23. Un tel agencement permet d'améliorer le rendement du cycle thermodynamique qui prend place au sein du circuit de fluide réfrigérant dans des conditions climatiques extérieures particulièrement défavorables, par exemple lorsque la température extérieure est inférieure à 5°C.

Les configurations décrites en relation avec les figures 2 et 3 trouvent une application particulièrement avantageuse pour des conditions climatiques tempérées, potentiellement humides. En effet, les figures 2 et 3 présentent le dispositif de conditionnement thermique 1 selon deux variantes du mode « déshumidification ».

En dehors des conditions climatiques rendant nécessaire le mode « déshumidification », un tel mode « déshumidification » n'est plus un paramètre déterminant dans la gestion du confort. Il est alors envisagé de basculer dans d'autres modes de fonctionnement qui vont maintenant être décrits.

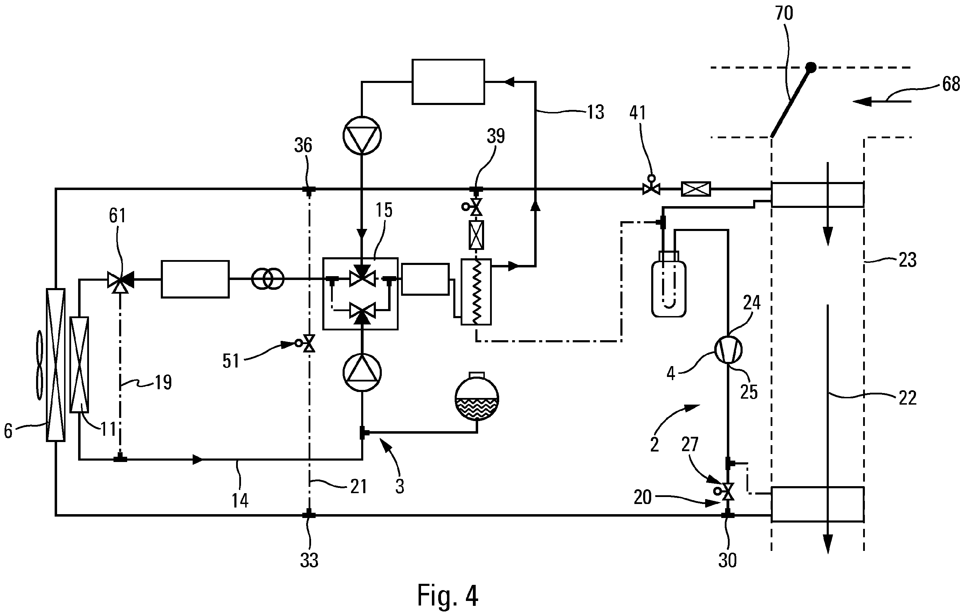

La figure 4 est une vue schématique du dispositif de conditionnement thermique en mode « été », selon une première variante de réalisation. La figure 4 illustre donc le dispositif de conditionnement thermique selon la présente invention pendant une phase de fonctionnement dite « été » correspondant à un besoin en refroidissement de l'habitacle du véhicule.

On s'attachera à décrire ci-dessous les différences avec la configuration présentée en rapport avec la figure 2, et on se reportera à la description de cette figure pour les éléments ou positions identiques.

Selon cette première variante du mode « été », le premier moyen de commutation 27, en particulier la première vanne deux-voies, est agencé de sorte que le fluide réfrigérant passe directement du compresseur 4 vers le deuxième point de raccordement 30, en circulant au travers de la première conduite de contournement 20. Le fluide réfrigérant circule en très faible quantité dans l'échangeur de chaleur intérieur 5 de sorte qu'il ne subit que peu d'échange thermique avec le flux d'air intérieur 22 traversant l'échangeur 5. Il conserve donc son niveau de pression et de température.

Dans le cas d'un moyen de commutation 27 formé d'une vanne trois-voies, le fluide réfrigérant ne circule pas dans l'échangeur de chaleur intérieur 5 lorsque la vanne est en position passante. Le fluide réfrigérant ne subit alors pas d'échange thermique avec le flux d'air intérieur 22 à la traversée l'échangeur de chaleur intérieur 5. Il conserve donc son niveau de pression et de température.

Le fluide réfrigérant poursuit son parcours et traverse le troisième point de raccordement 33. Le deuxième moyen de commutation 51 est en position fermée, si bien que le fluide réfrigérant est contraint à traverser l'échangeur de chaleur extérieur 6 puisque ce fluide réfrigérant n'empreinte pas la deuxième conduite de contournement 21. On comprend donc que la configuration du deuxième moyen de commutation 51 est telle que la circulation dans la conduite de contournement 21 est bloquée.

Par suite, le fluide réfrigérant traverse, successivement, l'échangeur de chaleur extérieur 6, le quatrième point de raccordement 36, le cinquième point de raccordement 39 pour atteindre le troisième moyen de commutation 41.

Dans une telle configuration, le circuit de fluide réfrigérant dissipe ses calories dans le flux d'air extérieur au moyen de l'échangeur de chaleur extérieur 6, ce dernier se comportant alors comme un condenseur.

Entre l'orifice de sortie 25 du compresseur 4 et le premier organe de détente 40 en passant par l'échangeur de chaleur extérieur 6, le fluide réfrigérant est à haute pression et haute température alors qu'entre le deuxième organe de détente 40 et l'orifice d'entrée 24 du compresseur 4, le fluide réfrigérant est à basse pression et basse température.

La configuration du circuit de fluide caloporteur 3 est identique à celle décrite à la figure 2 à l'exception de ce qui suit. On se reportera à la description de la figure 2 pour connaître la structure et la position des composants identiques.

Le moyen de gestion 61 de la circulation du fluide caloporteur est placé en une position où le fluide caloporteur est contraint de circuler vers le radiateur 11. Ainsi, le moyen de gestion 61 interdit toute circulation du fluide caloporteur au sein de la troisième conduite de contournement 19.

Une telle configuration permet d'assurer un refroidissement des composants de la chaîne de traction électrique du véhicule, c'est-à-dire la batterie ou le module de batteries, l'onduleur et/ou le moteur électrique d'entraînement du véhicule. Le fluide caloporteur circule à la fois dans la première boucle 13 et dans la deuxième boucle 14 et dissipe les calories collectées auprès des composants dans le flux d'air extérieur qui traverse le radiateur 11.

Dans ce mode « été » selon cette première variante, le flux d'air intérieur 22 qui circule dans le boîtier 23 est un flux d'air frais 68 prélevé à l'extérieur de l'habitacle. Pour ce faire, le moyen de sélection 70 est placé dans une position où il interdit l'entrée d'un flux d'air recyclé et autorise l'entrée du flux d'air frais 68.

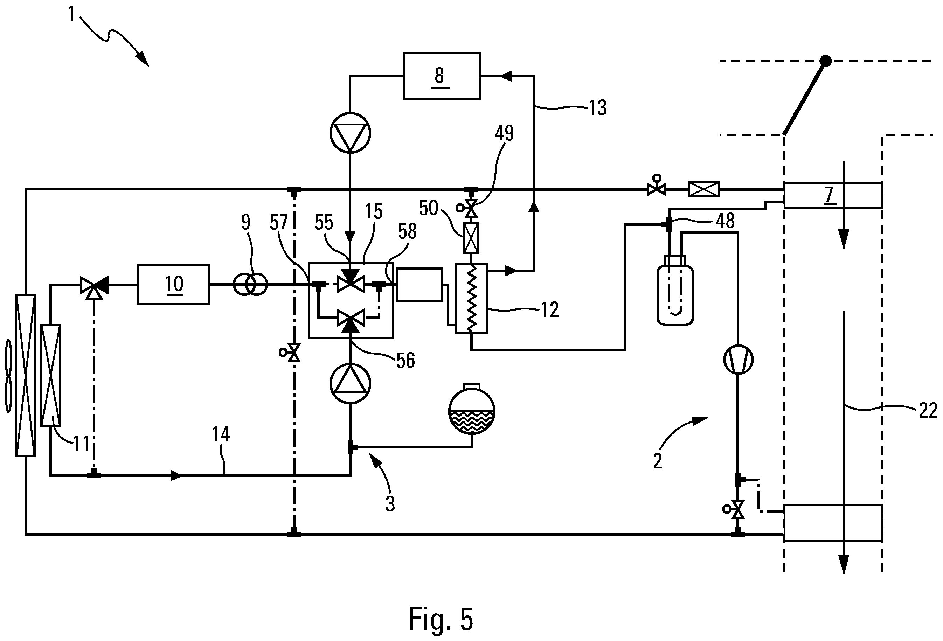

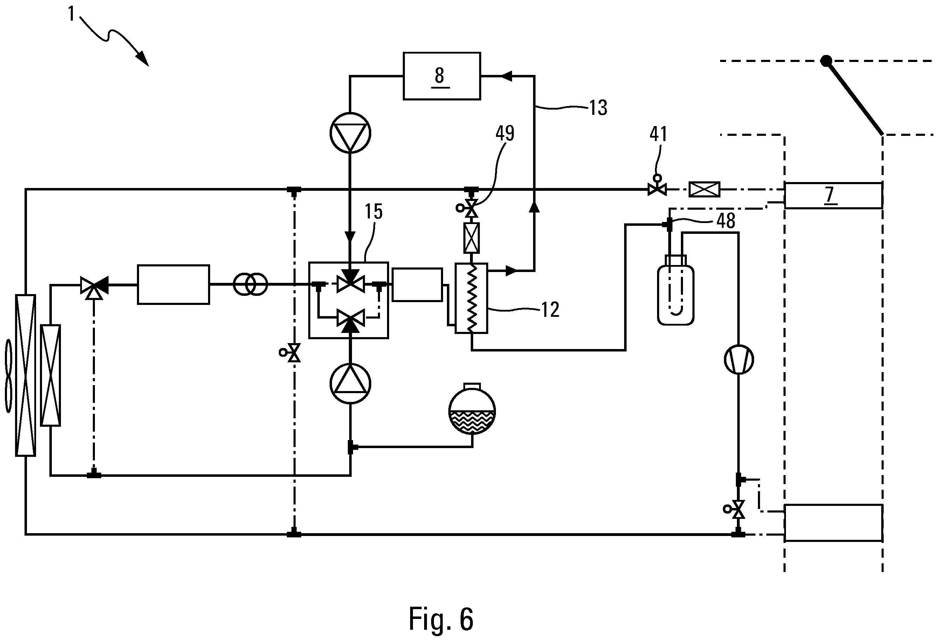

Les figures 4 à 6 présentent le dispositif de conditionnement thermique 1 en mode « été » selon diverses variantes de réalisation. Les figures 5 et 6 seront décrites quant aux différences par rapport à la figure 4. Les éléments précédemment décrits et fonctionnant dans les mêmes conditions ne seront pas décrits plus en détails et on se reportera à la description des figures précédentes.

La figure 5 est une vue schématique du dispositif de conditionnement thermique 1 de la présente invention en mode « été », selon un deuxième mode de réalisation. A la différence de la figure 4, le fluide réfrigérant est autorisé à circuler dans l'échangeur de chaleur fluide/fluide 12. A cet effet, le quatrième dispositif de commutation 49 est en position passante de sorte que le fluide réfrigérant atteint le deuxième organe de détente 50.

Ce deuxième organe de détente 50 abaisse la pression du fluide réfrigérant. Le fluide réfrigérant se vaporise en échangeant avec le fluide caloporteur à la traversée de l'échangeur de chaleur fluide/fluide 12. Une telle configuration permet de capter les calories présentes dans le fluide caloporteur qui circule dans la première boucle 13, celles-ci étant dégagées par les composants de la chaîne de traction électrique du véhicule et collectées par le premier échangeur thermique associé à un composant 8, c'est-à-dire l'échangeur dédié à la batterie ou au module de batteries.

L'échangeur de chaleur fluide/fluide 12 forme ainsi un levier supplémentaire à l'évaporateur 7 pour augmenter la quantité de fluide réfrigérant évaporé tout en refroidissant le composant attaché au premier échangeur thermique associé à un composant 8. Le rendement du cycle thermodynamique qui prend place dans le circuit de fluide réfrigérant 2 est amélioré par cette configuration.

Le fluide réfrigérant ayant traversé l'échangeur de chaleur fluide/fluide 12 et l'évaporateur 7 se regroupe au niveau du sixième point de raccordement 48.

En ce qui concerne le circuit de fluide caloporteur, on notera que le dispositif d'interconnexion 15 est placé en une position où il sépare la première boucle 13 de la deuxième boucle 14. En d'autres termes, le fluide caloporteur qui circule dans la première boucle 13 est distinct du fluide caloporteur qui circule dans la deuxième boucle 14. La première boucle 13 est ainsi séparée de la deuxième boucle 14 et le fluide caloporteur qui circule dans la première boucle 13 ne se mélange pas avec le fluide caloporteur circulant dans la deuxième boucle 14.

Pour ce faire, le premier orifice d'entrée 55 du dispositif d'interconnexion 15 est raccordé au deuxième orifice de sortie 58 alors que le deuxième orifice d'entrée 56 est raccordé au premier orifice de sortie 55. De la sorte, la circulation du fluide caloporteur dans la première boucle 13 est rendue indépendante de la circulation du fluide caloporteur présent dans la deuxième boucle 14.

Une telle phase de fonctionnement permet d'assurer le refroidissement du flux d'air intérieur 22 envoyé dans l'habitacle. Il est également possible d'assurer un refroidissement différent entre, d'une part le premier échangeur thermique associé à un composant 8 et, d'autre part le deuxième échangeur thermique associé à un composant 9 et le troisième échangeur thermique associé à un composant 10.

Le premier échangeur thermique associé à un composant 8 est alors refroidi exclusivement par le circuit de fluide réfrigérant 2, au moyen de l'échangeur de chaleur fluide/fluide 12. Le deuxième échangeur thermique associé à un composant 9 et le troisième échangeur thermique associé à un composant 10 sont refroidis exclusivement par l'échange thermique pratiqué au niveau du radiateur 11.

Une telle configuration est, en particulier, utilisée pour le cas où la température extérieure est élevée afin de garantir un refroidissement adapté des composants associés, en l'occurrence, avantageusement, la batterie ou le module de batteries et/ou l'onduleur et/ou le moteur électrique d'entraînement du véhicule, par l'intermédiaire du premier échangeur thermique associé à un composant 8 et/ou du deuxième échangeur thermique associé à un composant 9 et/ou du troisième échangeur thermique associé à un composant 10.

Une telle configuration est encore particulièrement avantageuse dans le cas où la température extérieure est élevée, cette température étant supérieure à un seuil de température limite garantissant la pérennité de la batterie, ou du module de batteries, ce dernier composant étant plus particulièrement sensible aux écarts de températures. C'est la raison pour laquelle, selon ce mode, le refroidissement du premier échangeur thermique associé à un composant 8 est assuré exclusivement par le circuit de fluide réfrigérant, comme évoqué plus haut.

Cette configuration présente également un avantage en utilisant les calories transportées par le fluide caloporteur pour réchauffer le fluide réfrigérant afin d'augmenter les échanges thermiques du côté basse pression et basse température. Ceci contribue à augmenter le rendement du cycle thermodynamique qui prend place au sein du circuit de fluide réfrigérant 2.

La figure 6 est une vue schématique du dispositif de conditionnement thermique 1 en mode « charge » selon l'invention. On se reportera à la description de la figure 5, la description ci-dessous précisant les éléments ou fonctionnements différents.

Ce mode « charge » vise le cas où le composant attaché au premier échangeur thermique associé à un composant 8 est une batterie, ou un module de batteries, et que cette dernière est en phase de charge. Dans une telle situation, la batterie s'échauffe. Afin de maintenir la durée de vie et/ou optimiser le fonctionnement de la batterie, il faut assurer le refroidissement de celle-ci.

Pour assurer un refroidissement maximum du fluide caloporteur circulant dans la première boucle 13, le troisième moyen de commutation 41 est placé dans une position fermée alors que le quatrième moyen de commutation 49 est en position passante. Le fluide réfrigérant ne circule donc pas dans l'évaporateur 7 et l'intégralité du fluide réfrigérant est envoyé vers l'échangeur de chaleur fluide/fluide 12, en passant au travers du deuxième organe de détente 50 qui assure un abaissement de la pression de ce fluide réfrigérant préalablement à son entrée dans l'échangeur de chaleur fluide/fluide 12.

L'intégralité de l'évaporation du fluide réfrigérant se faisant par échange thermique avec le fluide caloporteur présent dans la première boucle 13, la température de celui-ci est abaissée de manière à garantir le refroidissement de la batterie pendant la phase de charge.

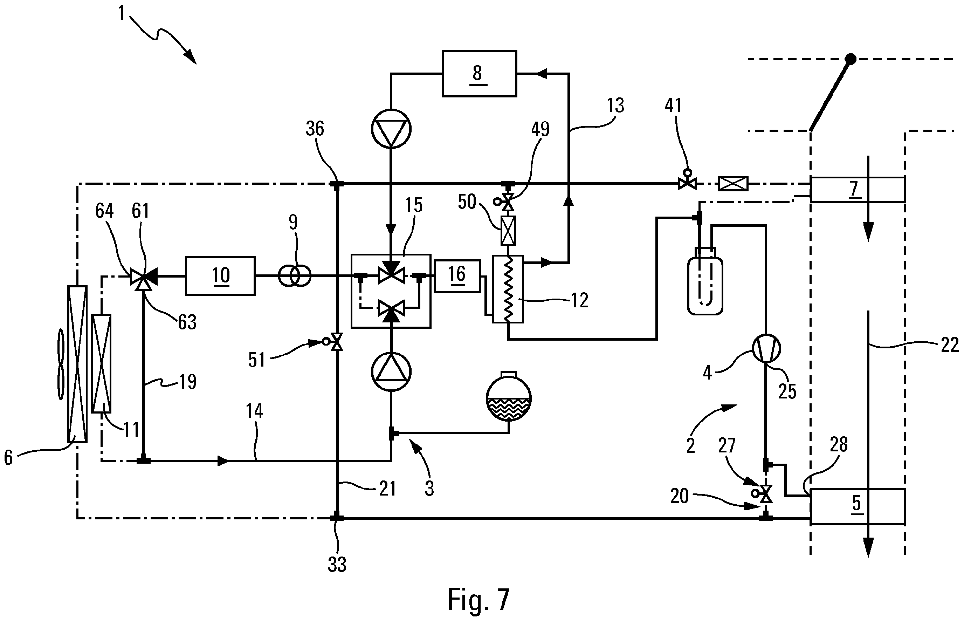

La figure 7 est une vue schématique du dispositif de conditionnement thermique 1 selon la présente invention en mode « hiver ». La figure 7 illustre donc le dispositif de conditionnement thermique pendant une phase de fonctionnement dite « hiver », correspondant à un besoin en chauffage de l'habitacle du véhicule.

Dans cette configuration, le premier moyen de commutation 27, en particulier la première vanne deux-voies, est en position fermée afin de permettre une circulation du fluide réfrigérant dans l'échangeur de chaleur intérieur 5. A cet effet, la première vanne deux-voies dudit moyen de commutation 27 est agencée afin de mettre en communication l'orifice de sortie 25 du compresseur 4 avec l'entrée 28 de l'échangeur de chaleur intérieur 5. Ainsi, le fluide réfrigérant circule du compresseur 4 à travers l'échangeur de chaleur intérieur 5 en échangeant de la chaleur avec le flux d'air intérieur 22, afin de chauffer l'habitacle. Le fluide réfrigérant ne passe donc pas dans la première conduite de contournement 20.

Le fluide réfrigérant sort de l'échangeur de chaleur intérieur 5 et est dirigé vers le troisième point de raccordement 33, où ce fluide réfrigérant est bifurqué vers la deuxième conduite de contournement 21. Pour ce faire, le deuxième moyen de commutation 51 est en position passante, ce qui se traduit par un contournement de l'échangeur de chaleur extérieur 6. Le fluide réfrigérant arrivant au quatrième point de raccordement 36 n'est donc pas refroidi par le flux d'air extérieur.

Comme dans le cas de la figure 6, le troisième moyen de commutation 41 est en position fermée alors que le quatrième moyen de commutation 49 est en position passante. Le fluide réfrigérant ne circule donc pas dans l'évaporateur 7 et l'intégralité du fluide réfrigérant est envoyé vers l'échangeur de chaleur fluide/fluide 12, en passant au travers du deuxième organe de détente 50 qui assure un abaissement de la pression de ce fluide réfrigérant préalablement à son entrée dans l'échangeur de chaleur fluide/fluide 12.

Le circuit de fluide caloporteur 3 est configuré de manière identique à la variante expliquée en rapport avec la figure 2, où la première boucle 13 est raccordée à la deuxième boucle 14 par le dispositif d'interconnexion 15 et où le fluide caloporteur contourne le radiateur 11 en passant par la troisième conduite de contournement 19.

Le moyen de chauffage 16 est ici activé. Autrement dit, son élément de chauffage électrique est raccordé à source d'énergie électrique de manière à fournir des calories au fluide caloporteur qui traverse le moyen de chauffage 16. Cette élévation de température du fluide caloporteur immédiatement en amont de l'échangeur de chaleur fluide/fluide 12 garantit un écart de température suffisant entre le fluide caloporteur et le fluide réfrigérant traversant tous deux l'échangeur de chaleur fluide/fluide 12. Le rendement du cycle thermodynamique qui prend place dans le circuit de fluide réfrigérant 2 est ainsi amélioré.

L'activation du moyen de chauffage 16 permet aussi de chauffer le fluide caloporteur de manière à maintenir ou atteindre une température du premier échangeur thermique associé à un composant 8 au dessus d'un seuil de température déterminé. Dans le cas d'une batterie, ou d'un module de batteries, cette configuration est avantageuse car la durée de vie et/ou la capacité d'une batterie est affectée lorsque sa température passe en dessous du seuil déterminé.

Dans l'un ou l'autre des deux cas décrits ci-dessus, le dispositif d'interconnexion 15 peut être placé dans une position où la première boucle 13 est isolée de la deuxième boucle 14, notamment selon le mode décrit à la figure 5. Ceci permet de réserver les calories générées par le moyen de chauffage 16 uniquement pour l'échangeur de chaleur fluide/fluide et/ou pour le premier échangeur thermique associé à un composant 8, dédié à la batterie ou au module de batteries.

L'activation de ce moyen de chauffage 16 peut être réalisée notamment pour générer une puissance additionnelle nécessaire au bon fonctionnement du cycle thermodynamique quand celui-ci fonctionne en pompe à chaleur.

A titre d'exemple, le moyen de chauffage 16 est un thermoplongeur baignant dans le fluide caloporteur. Le thermoplongeur est agencé pour fonctionner selon une tension d'alimentation comprise entre 200 V et 500V, et avantageusement identique à la tension d'alimentation fournie par la batterie, ou le module de batteries. Le thermoplongeur est avantageusement autocontrôlé, en ce sens qu'il comprend un thermostat détectant la température du fluide caloporteur pour autoriser ou interdire une mise en oeuvre du thermoplongeur.

Cette activation peut également être réalisée, par exemple, lors d'un arrêt du véhicule.

La configuration montrée à la figure 7 présente encore d'autres avantages. En effet, elle permet, grâce à la mise en communication de la première boucle 13 avec la deuxième boucle 14, de collecter des calories au niveau du deuxième échangeur thermique associé à un composant 9 et/ou au niveau du troisième échangeur thermique associé à un composant 10 pour les dissiper par échange thermique dans l'échangeur de chaleur fluide/fluide 12 avec le fluide réfrigérant. C'est notamment le cas lorsque le moteur électrique entraine le véhicule et dégage des calories.

Selon la configuration illustrée à la figure 7, la première boucle 13 et la deuxième boucle 14 du circuit de fluide caloporteur 3 sont, par exemple, en série l'une par rapport à l'autre. Ainsi, on mutualise les calories dissipées par les divers composants de la chaîne de traction électrique, notamment le moteur électrique d'entraînement du véhicule et l'onduleur. Ceci permet également de chauffer la batterie, ou le module de batteries, en roulage afin d'évoluer vers des points de rendement plus intéressants en un temps réduit.

Lorsque la température optimale de fonctionnement est atteinte, il est nécessaire d'évacuer les calories dissipées par les composants disposés dans le circuit de fluide caloporteur 3, en l'occurrence la batterie, ou le module de batteries, et/ou l'onduleur et/ou le moteur électrique d'entraînement du véhicule, vers l'extérieur par l'intermédiaire du radiateur 11.

La régulation en température se fait par la régulation du moyen de gestion 61 de la circulation de fluide caloporteur. Cette régulation permet une circulation du fluide caloporteur dans le radiateur 11 et/ou dans la troisième conduite de contournement 19, notamment selon le degré d'ouverture de la première voie de sortie 63 et de la deuxième voie de sortie 64 du moyen de gestion 61.

Bien évidemment, dans l'ensemble des exemples de réalisation présentés sur les figures 1 à 7, le dispositif d'interconnexion 15 est toujours à même d'être configuré pour isoler ou mutualiser la première boucle 13 et la deuxième boucle 14 du circuit de fluide caloporteur 3.

Le dispositif d'interconnexion 15 permet donc de découpler le refroidissement du premier composant, c'est-à-dire la batterie ou le module de batteries, du deuxième composant et/ou du troisième composant, respectivement l'onduleur et/ou le moteur électrique d'entraînement du véhicule. Un tel isolement thermique de ces composants est avantageux, notamment, dans le cas de températures d'air extérieures très élevées, où le radiateur 11 ne permet d'apporter un complément de refroidissement au fluide caloporteur (cas de la figure 5).

Au contraire, l'échange de chaleur réalisé dans le radiateur 11 est susceptible de réchauffer le fluide caloporteur, qui est par ailleurs refroidi par l'échangeur de chaleur fluide/fluide 12. En découplant la première boucle 13 et la deuxième boucle 14 du circuit de fluide caloporteur 3, la température du fluide caloporteur dans la première boucle 13 est plus froide que la température du fluide caloporteur dans la deuxième boucle 14.

Ceci améliore le refroidissement du premier composant, c'est-à-dire la batterie ou le module de batteries. En revanche, la température du fluide caloporteur dans la deuxième boucle 14 est plus élevée. Ceci est moins préoccupant puisque le deuxième composant, c'est-à-dire l'onduleur, et le troisième composant, c'est-à-dire le moteur électrique d'entraînement du véhicule, sont moins sensibles aux variations de températures.

On notera tout particulièrement que, dans les modes décrits ci-dessus, l'échangeur de chaleur extérieur est soit inutilisé, c'est-à-dire non traversé par le fluide réfrigérant, soit utilisé en mode condenseur. Il n'est cependant pas utilisé en mode évaporateur, ce qui évite toute formation de givre sur la surface de cet échangeur quand les conditions climatiques sont humides et froides, notamment proches ou inférieures à 0°C.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et, notamment, toutes combinaisons des différents modes de réalisation décrits précédemment.

A titre d'exemple, les échangeurs thermiques 13 et 14 peuvent aussi être associés à un convertisseur DC/DC destiné au chargement d'une batterie basse tension par la batterie haute tension.

En outre le dispositif objet de l'invention peut aussi comprendre un positionnement en série, en parallèle ou une combinaison série et parallèle des échangeurs thermiques associés aux composants. A titre d'exemple, l'échangeur thermique 9 lié à l'onduleur peut être disposé en série de l'échangeur thermique lié au convertisseur DC/DC tandis que l'échangeur thermique 10 associé au moteur est disposé en parallèle de l'ensemble d'échangeurs thermiques liés à l'onduleur et au convertisseur DC/DC.

## Revendications

1. Dispositif de conditionnement thermique (1) comprenant un circuit de fluide réfrigérant (2) et un circuit de fluide caloporteur (3),
- le circuit de fluide réfrigérant (2) comprenant au moins un compresseur (4), un échangeur de chaleur intérieur (5), un échangeur de chaleur extérieur (6) et un évaporateur (7),
- le circuit de fluide caloporteur (3) comprenant au moins un premier échangeur thermique associé à un premier composant (8), un deuxième échangeur thermique associé à un deuxième composant (9) et un radiateur (11) et un troisième échangeur thermique associé à un troisième composant (10) installé dans la deuxième boucle (14),
ledit premier composant (8) étant au moins une batterie, ledit deuxième composant (9) étant au moins un onduleur, ledit troisième composant (10) étant un moteur électrique,
- un échangeur de chaleur fluide/fluide (12) installé dans le circuit de fluide réfrigérant (2) et dans le circuit de fluide caloporteur (3),
le circuit de fluide caloporteur (3) comprenant une première boucle (13) et une deuxième boucle (14) interconnectées par un dispositif d'interconnexion (15), **caractérisée par le fait que** la première boucle (13) comprend l'échangeur de chaleur fluide/fluide (12), le premier échangeur thermique associé à un composant (8) et un moyen de chauffage (16) du fluide caloporteur intercalé entre le dispositif d'interconnexion (15) et l'échangeur de chaleur fluide/fluide (12), la deuxième boucle (14) comprenant le deuxième échangeur thermique associé à un composant (9) et le radiateur (11).

2. Dispositif selon la revendication 1, dans lequel le moyen de chauffage (16) comprend un élément de chauffage électrique.

3. Dispositif selon la revendication 1 ou 2, dans lequel le moyen de chauffage (16) est installé immédiatement en amont de l'échangeur de chaleur fluide/fluide (12), selon le sens de circulation du fluide caloporteur dans la première boucle (13).

4. Dispositif selon l'une quelconque des revendications précédentes, dans lequel le moyen de chauffage (16) est installé immédiatement en aval du dispositif d'interconnexion (15) selon le sens de circulation du fluide caloporteur dans la première boucle (13).

5. Dispositif selon l'une quelconque des revendications précédentes, dans lequel la première boucle (13) comprend une première pompe (17) de circulation du fluide caloporteur, et dans lequel la deuxième boucle (14) comprend une deuxième pompe (18) de circulation du fluide caloporteur.

6. Dispositif selon l'une quelconque des revendications précédentes, dans lequel la deuxième boucle (14) comprend une conduite de contournement (19) du radiateur (11), dite troisième conduite de contournement (19).

7. Dispositif selon l'une quelconque des revendications précédentes, dans lequel l'échangeur de chaleur fluide/fluide (12) est installé en parallèle de l'évaporateur (7).

8. Dispositif selon l'une quelconque des revendications précédentes, dans lequel le circuit de fluide réfrigérant (2) comporte une conduite de contournement (20) de l'échangeur de chaleur intérieur (5), dite première conduite de contournement (20).

9. Dispositif selon la revendication 9, dans lequel le circuit de fluide réfrigérant (2) comporte une conduite de contournement (21) de l'échangeur de chaleur extérieur (6), dite deuxième conduite de contournement (21).

10. Dispositif selon l'une quelconque des revendications précédentes, dans lequel un flux d'air intérieur (22) est canalisé par un boîtier (23) dans lequel sont disposés l'évaporateur (7) et l'échangeur de chaleur intérieur (5) afin d'être traversés par le flux d'air intérieur (22) préalablement à sa distribution dans un habitacle d'un véhicule.

11. Dispositif selon la revendication 8 ou 9, dans lequel le fluide réfrigérant circule, dans le circuit de fluide réfrigérant (2), successivement, dans le compresseur (4), la première conduite de contournement (20), l'échangeur de chaleur extérieur (6) ou la deuxième conduite de contournement (21), l'évaporateur (7) et/ou l'échangeur de chaleur fluide/fluide (12), pour retourner au compresseur (4).

12. Dispositif selon la revendication 9, dans lequel le fluide réfrigérant circule dans le circuit de fluide réfrigérant (2), successivement, dans le compresseur (4), l'échangeur de chaleur intérieur (5), l'échangeur de chaleur extérieur (6) ou la deuxième conduite de contournement (21), l'évaporateur (7) et/ou l'échangeur de chaleur fluide/fluide (12), pour retourner au compresseur (4).

13. Dispositif selon l'une quelconque des revendications précédentes, dans lequel le fluide caloporteur circule dans la première boucle (13), successivement, dans le premier échangeur thermique associé à un composant (8), le dispositif d'interconnexion (15), le moyen de chauffage (16), l'échangeur de chaleur fluide/fluide (12), pour retourner au premier échangeur thermique associé à un composant (8).

14. Dispositif selon la revendication 6, dans lequel le fluide caloporteur circule dans la deuxième boucle (14), successivement, dans le deuxième échangeur thermique associé à un composant (9), le radiateur (11) et/ou la troisième conduite de contournement (19), le dispositif d'interconnexion (15), pour retourner au deuxième échangeur thermique associé à un composant (9).

15. Dispositif selon la revendication 6, dans lequel le fluide caloporteur circule dans le circuit de fluide caloporteur (3), successivement, dans le premier échangeur thermique associé à un composant (8), le dispositif d'interconnexion (15), le deuxième échangeur thermique associé à un composant (9), le radiateur (11) et/ou la troisième conduite de contournement (19), le dispositif d'interconnexion (15), le moyen de chauffage (16), l'échangeur de chaleur fluide/fluide (12), pour retourner au premier échangeur thermique associé à un composant (8).

## Patentansprüche

1. Vorrichtung zur thermischen Konditionierung (1) umfassend einen Kühlfluidkreislauf (2) und einen Wärmeübertragungsfluid-Kreislauf (3),
- der Kühlfluidkreislauf (2) umfassend mindestens einen Kompressor (4) einen inneren Wärmeaustauscher (5), einen äußeren Wärmeaustauscher (6) und einen Verdampfer (7),
- der Wärmeübertragungsfluid-Kreislauf (3) umfassend mindestens einen ersten Wärmeaustauscher, der mit einem ersten Bestandteil (8) in Verbindung steht, einen zweiten Wärmeaustauscher, der mit einem zweiten Bestandteil (9) in Verbindung steht, und einen Radiator (11), der mit einem dritten Bestandteil (10) in Verbindung steht, der in der zweiten Schleife (14) installiert ist,
wobei der erste Bestandteil (8) mindestens eine Batterie ist, der zweite Bestandteil (9) mindestens ein Wechselrichter ist, der dritte Bestandteil (10) ein Elektromotor ist,
- einen Fluid/Fluid-Wärmeaustauscher (12), der in dem Kühlfluidkreislauf (2) und in dem Wärmeübertragungsfluid-Kreislauf (3) installiert ist,
der Wärmeübertragungsfluid-Kreislauf (3) umfassend eine erste Schleife (13) und eine zweite Schleife (14), die durch eine Verbindungsvorrichtung (15) verbunden sind, **dadurch gekennzeichnet, dass** die erste Schleife (13) den Fluid/Fluid-Wärmeaustauscher (12), den ersten Wärmeaustauscher, der mit einem Bestandteil (8) in Verbindung steht, und ein Mittel zum Erhitzen (16) des Wärmeübertragungsfluids, das zwischen der Verbindungsvorrichtung (15) und dem Fluid/Fluid-Wärmeaustauscher (12) angeordnet ist, umfasst, die zweite Schleife (14) umfassend den zweiten Wärmeaustauscher, der mit einem Bestandteil (9) in Verbindung steht, und den Radiator (11).

2. Vorrichtung nach Anspruch 1, wobei das Mittel zum Erhitzen (16) ein elektrisches Heizelement umfasst.

3. Vorrichtung nach Anspruch 1 oder 2, wobei das Mittel zum Erhitzen (16) unmittelbar stromauf des Fluid/Fluid-Wärmeaustauschers (12) in Strömungsrichtung des Wärmeübertragungsfluid in der ersten Schleife (13) installiert ist.

4. Vorrichtung nach einem der vorhergehenden Ansprüche, wobei das Mittel zum Erhitzen (16) unmittelbar stromab der Verbindungsvorrichtung (15) in Strömungsrichtung des Wärmeübertragungsfluid in der ersten Schleife (13) installiert ist.

5. Vorrichtung nach einem der vorhergehenden Ansprüche, wobei die erste Schleife (13) eine erste Pumpe (17) zur Umwälzung des Wärmeübertragungsfluids umfasst und wobei die zweite Schleife (14) eine zweite Pumpe (18) zur Umwälzung des Wärmeübertragungsfluids umfasst.

6. Vorrichtung nach einem der vorhergehenden Ansprüche, wobei die zweite Schleife (14) eine Leitung zur Umgehung (19) des Radiators (11), die dritte Leitung zur Umgehung (19), umfasst.

7. Vorrichtung nach einem der vorhergehenden Ansprüche, wobei der Fluid/Fluid-Wärmeaustauscher (12) parallel zu dem Verdampfer (7) installiert ist.

8. Vorrichtung nach einem der vorhergehenden Ansprüche, wobei der Kühlfluidkreislauf (2) eine Leitung zur Umgehung (20) des inneren Wärmeaustauschers (5), die erste Leitung zur Umgehung (20), aufweist.

9. Vorrichtung nach Anspruch 9, wobei der Kühlfluidkreislauf (2) eine Leitung zur Umgehung (21) des äußeren Wärmeaustauschers (6), die zweite Leitung zur Umgehung (21), aufweist.

10. Vorrichtung nach einem der vorhergehenden Ansprüche, wobei ein innerer Luftstrom (22) durch ein Gehäuse (23) kanalisiert wird, in dem der Verdampfer (7) und der innere Wärmeaustauscher (5) angeordnet sind, um von dem inneren Luftstrom (22) vor dessen Verteilung in einem Fahrzeuginnenraum durchquert zu werden.

11. Vorrichtung nach Anspruch 8 oder 9, wobei das Kühlfluid in dem Kühlfluidkreislauf (2) aufeinanderfolgend in den Kompressor (4), die erste Leitung zur Umgehung (20), den äußeren Wärmeaustauscher (6) oder die zweite Leitung zur Umgehung (21), den Verdampfer (7) und/oder den Fluid/Fluid-Wärmeaustauscher (12) strömt, um zu dem Kompressor (4) zurückzukehren.

12. Vorrichtung nach Anspruch 9, wobei das Kühlfluid in dem Kühlfluidkreislauf (2) aufeinanderfolgend in den Kompressor (4), den inneren Wärmeaustauscher (5), den äußeren Wärmeaustauscher (6) oder die zweite Leitung zur Umgehung (21), den Verdampfer (7) und/oder den Fluid/Fluid-Wärmeaustauscher (12) strömt, um zu dem Kompressor (4) zurückzukehren.

13. Vorrichtung nach einem der vorhergehenden Ansprüche, wobei das Wärmeübertragungsfluid in der ersten Schleife (13) aufeinanderfolgend in den ersten Wärmeaustauscher, der mit einem Bestandteil (8) in Verbindung steht, die Verbindungsvorrichtung (15), das Mittel zum Erhitzen (16), den Fluid/Fluid-Wärmeaustauscher (12) strömt, um zu dem ersten Wärmeaustauscher, der mit einem Bestandteil (8) in Verbindung steht, zurückzukehren.

14. Vorrichtung nach Anspruch 6, wobei das Wärmeübertragungsfluid in der zweiten Schleife (14) aufeinanderfolgend in den zweiten Wärmeaustauscher, der mit einem Bestandteil (9) in Verbindung steht, den Radiator (11) und/oder die dritte Leitung zur Umgehung (19), die Verbindungsvorrichtung (15) strömt, um zu dem zweiten Wärmeaustauscher, der mit einem Bestandteil (9) in Verbindung steht, zurückzukehren.

15. Vorrichtung nach Anspruch 6, wobei das Wärmeübertragungsfluid in dem Wärmeübertragungsfluid-Kreislauf (3) aufeinanderfolgend in den ersten Wärmeaustauscher, der mit einem Bestandteil (8) in Verbindung steht, die Verbindungsvorrichtung (15), den zweiten Wärmeaustauscher, der mit einem Bestandteil (9) in Verbindung steht, den Radiator (11) und/oder die dritte Leitung zur Umgehung (19), die Verbindungsvorrichtung (15), das Mittel zum Erhitzen (16), den Fluid/Fluid-Wärmeaustauscher (12) strömt, um zu dem ersten Wärmeaustauscher, der mit einem Bestandteil (8) in Verbindung steht, zurückzukehren.

## Claims

1. Thermal conditioning device (1) comprising a refrigerant circuit (2) and a heat-transfer fluid circuit (3),
- the refrigerant circuit (2) comprising at least a compressor (4) an internal heat exchanger (5), an external heat exchanger (6) and an evaporator (7),
- the heat-transfer fluid circuit (3) comprising at least a first heat exchanger associated with a first component (8), a second heat exchanger associated with a second component (9) and a radiator (11) and a third heat exchanger associated with a third component (10) installed in the second loop (14),
- the said first component (8) being at least one battery, the said second component (9) being at least one inverter, the said third component (10) being an electric motor,
- a fluid/fluid heat exchanger (12) installed in the refrigerant circuit (2) and in the heat-transfer fluid circuit (3),
the heat-transfer fluid circuit (3) comprising a first loop (13) and a second loop (14) which are interconnected by an interconnection device (15), **characterized in that** the first loop (13) comprises the fluid/fluid heat exchanger (12), the first heat exchanger associated with a component (8) and a heating means (16) for heating the heat-transfer fluid, interposed between the interconnection device (15) and the fluid/fluid heat exchanger (12), the second loop (14) comprising the second heat exchanger associated with a component (9) and the radiator (11).

2. Device according to Claim 1, in which the heating means (16) comprises an electric heating element.

3. Device according to Claim 1 or 2, in which the heating means (16) is installed immediately upstream of the fluid/fluid heat exchanger (12) according to the direction in which the heat-transfer fluid circulates in the first loop (13).

4. Device according to any one of the preceding claims, in which the heating means (16) is installed immediately downstream of the interconnection device (15) according to the direction in which the heat-transfer fluid circulates in the first loop (13).

5. Device according to any one of the preceding claims, in which the first loop (13) comprises a first pump (17) for circulating the heat-transfer fluid, and in which the second loop (14) comprises a second heat-transfer fluid circulation pump (18).

6. Device according to any one of the preceding claims, in which the second loop (14) comprises a bypass pipe (19) bypassing the radiator (11) and referred to as the third bypass pipe (19).

7. Device according to any one of the preceding claims, in which the fluid/fluid heat exchanger (12) is installed in parallel with the evaporator (7).

8. Device according to any one of the preceding claims, in which the refrigerant circuit (2) comprises a bypass pipe (20) bypassing the internal heat exchanger (5) and referred to as the first bypass pipe (20) .

9. Device according to Claim 9, in which the refrigerant circuit (2) comprises a bypass pipe (21) bypassing the external heat exchanger (6) and referred to as the second bypass pipe (21).

10. Device according to any one the preceding claims, in which an internal air flow (22) is ducted by a housing (23) in which the evaporator (7) and the internal heat exchanger (5) are arranged so that the internal air flow (22) can pass through them before being distributed into the interior of a vehicle.

11. Device according to Claim 8 or 9, in which the refrigerant circulates in the refrigerant circuit (2) in succession through the compressor (4), the first bypass pipe (20), the external heat exchanger (6) or the second bypass pipe (21), the evaporator (7) and/or the fluid/fluid heat exchanger (12), in order to return to the compressor (4).

12. Device according to Claim 9, in which the refrigerant circulates in the refrigerant circuit (2) in succession through the compressor (4), the internal heat exchanger (5), the external heat exchanger (6) or the second bypass pipe (21), the evaporator (7) and/or the fluid/fluid heat exchanger (12), in order to return to the compressor (4).

13. Device according to any one of the preceding claims, in which the heat-transfer fluid circulates in the first loop (13) in succession through the first heat exchanger associated with a component (8), the interconnection device (15), the heating means (16), the fluid/fluid heat exchanger (12) in order to return to the first heat exchanger associated with a component (8) .

14. Device according to Claim 6, in which the heat-transfer fluid circulates in the second loop (14) in succession through the second heat exchanger associated with a component (9), the radiator (11) and/or the third bypass pipe (19), the interconnection device (15) in order to return to the second heat exchanger associated with a component (9).

15. Device according to Claim 6, in which the heat-transfer fluid circulates in the heat-transfer fluid circuit (3) in succession through the first heat exchanger associated with a component (8), the interconnection device (15), the second heat exchanger associated with a component (9), the radiator (11) and/or the third bypass pipe (19), the interconnection device (15), the heating means (16), the fluid/fluid heat exchanger (12), in order to return to the first heat exchanger associated with a component (8).
